# EUROPEAN PATENT SPECIFICATION

(11) **EP 0 885 369 B1**
(45) Date of publication and mention of the grant of the patent: **27.08.2003**
(21) Application number: 97952943.5
(22) Date of filing: 15.12.1997
(51) Int. Cl.: F24J 2/04, F28D 15/00

(54) **DIODE CONDUCTIVE WALL**
DIODISCH WÄRMELEITENDE WAND
PAROI CONDUCTRICE A DIODES

(30) Priority: 16.12.1996 IT MI962631
(43) Date of publication of application: 23.12.1998
(73) Proprietor: Eudosia S.P.A., 20145 Milan (IT)
(72) Inventor: AUTUORI, Antonio, I-20142 Milan (IT)
(74) Representative: Gervasi, Gemma, Dr.
(86) International application number: EP9707025
(87) International publication number: WO98027392

(56) References cited:
- US-A- 4 540 042
- PATENT ABSTRACTS OF JAPAN vol. 7, no. 50 (M-197), 26 February 1983 & JP 57 198931 A (MISAWA HOOMU KK), 6 December 1982,
- PATENT ABSTRACTS OF JAPAN vol. 8, no. 258 (M-340) [1695] , 27 November 1984 & JP 59 129349 A (KOGYO GIJUTSUIN), 25 July 1984,
- PATENT ABSTRACTS OF JAPAN vol. 13, no. 360 (M-858), 11 August 1989 & JP 01 118078 A (AGENCY OF IND. SCIENCE & TECHNOL.), 10 May 1989,
- PATENT ABSTRACTS OF JAPAN vol. 9, no. 172 (M-397), 17 July 1985 & JP 60 042592 A (TAKASAGO NETSUGAKU KOGYO KK), 6 March 1985,
- PATENT ABSTRACTS OF JAPAN vol. 10, no. 372 (M-544), 11 December 1986 & JP 61 165591 A (TOSHIBA CORP.), 26 July 1986,

## Description

### Scope of invention

The invention consists of a diode conductive wall, that is, a wall which is made of thermally insulating material delimited by two thermally conductive external surfaces connected together by one or more thermal diodes (consisting of tubular bodies thermally coupled to the external surfaces of the diode conductive wall and at least partially filled with a heat transferring fluid), which transversely cross the wall made of thermally insulating material and which are able to transfer heat in basically one direction from one of the external surfaces of the diode conductive wall to the other.

The thermal diodes consist of two metal bodies thermally coupled to the external surfaces of the diode conductive wall and interconnected by a thermally insulating central body.

### Prior art

There are known in the prior art of the cooling devices means (called "heat pipes") used for carrying heat from points that are otherwise hard to reach and consisting of tubular metal bodies containing a heat transferring fluid. "Heat pipes" working and characteristics of the fluid inside them will not be described herein because they are already known and in any case do not regard the purpose of the present invention.

Likewise known are panels that enable the transfer of heat (preferably) in a single direction.

These panels are described, for example, in the article by R.K. Prudhoe and L. Dukas entitled "Thermal control of equipment enclosures - Design strategies for enhanced reliability" - INTELEC '93 - Procedures of the 15th Conference on Energy in Telecommunications - Paris, September 27-30, 1993, Volume II, pages 305-312.

JP 59 129349 discloses a heating wall consisting of a solar heat collecting material, a heat radiating material and a heat insulating material sandwiched between them. Heat pipes are arranged within the insulating material and contact both the solar heat collecting material and heat radiating material to take the solar heat indoors. JP 01 118078 discloses a similar wall, wherein the fluid contained in the heat pipes is made to evaporate by the solar heat on the heat collecting part, moves upwardly to the radiating part and condenses, returning to the heat collecting part. JP 60 042592 discloses a unidirectional heat transfer plate consisting of a hollow box comprised between two wide surfaces partitioned into cells by transversal cell walls slanting from one surface to the other, the cells containing a condensable fluid.

Subject of the present invention is a wall, called "diode conductive wall", which comprises at least one tubular body (or "thermal diode") of new type, containing a heat transferring fluid, which improves heat transfer through the wall itself in (practically) one direction.

### Summary of the invention

The subject of the present invention is a diode conductive wall, comprising a wall made of thermally insulating material, delimited by two thermally conductive external surfaces, connected together by one or more thermal diodes which transversely cross the wall made of thermally insulating material.

A thermal diode transfers the heat in basically one direction from one external surface of the diode conductive wall to the other and consists of a tubular body, at least partially filled with a heat transferring fluid, comprising two metal bodies (each of which is thermally coupled to one of the external surfaces of the diode conductive wall) interconnected by means of a thermally insulating central body.

### List of figures

The invention will now be better described with reference to a non-limiting embodiment illustrated in the attached figures, where,
- Figure 1 shows a sectional view of a diode conductive wall comprising two thermal diodes according to the invention;
- Figure 2 shows one of the thermal diodes of Fig. 1;
- Figure 3 is a schematic representation of the container used in Example No. 1;
- Figure 4 presents a sectional view and a plan view of a possible application of diode conductive walls made according to the invention.

In the attached figures, the corresponding elements will be identified by means of the same numerical references.

### Detailed description

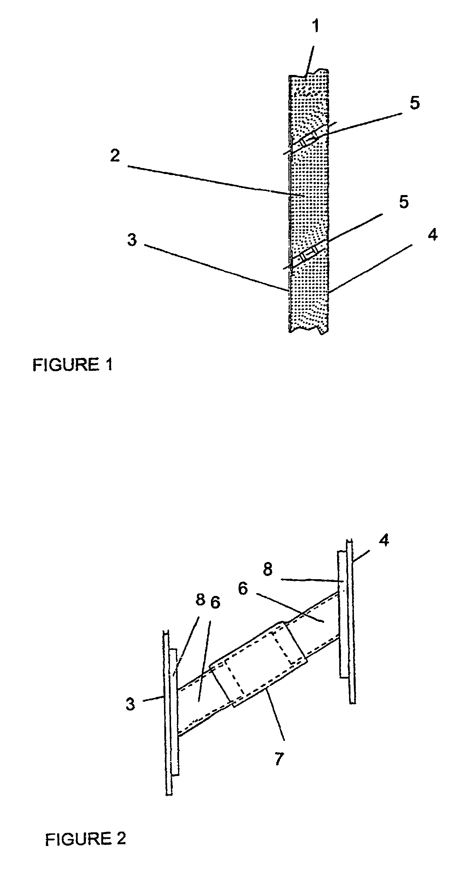

Figure 1 presents a sectional view of a diode conductive wall (1), which consists of a wall (2) made of thermally insulating material (e.g., polyurethane foam), delimited by two external surfaces (3, 4), which are thermally conductive and connected together by a pair of thermal diodes (5) which transversely cross the wall (2) made of thermally insulating material, enabling the heat to flow through the diode conductive wall (1) in (at least theoretically) a single direction.

In Fig. 1 may be seen the external surfaces (3, 4) consisting preferably of two sheets of metallic material, which delimit the diode conductive wall (1), the wall (2) made of thermally insulating material which thermally insulates the two external surfaces (3, 4) of the diode conductive wall (1) from one another, and a pair of thermal diodes (5), thermally connected to the aforesaid external surfaces (3, 4), with respect to which they are inclined.

Thermal diodes made up of a tubular metal body (at least partially filled with a heat transferring fluid), the ends of which are thermally coupled to the external surfaces of a diode conductive wall are already known.

This tubular metal body constitutes (or may constitute) a "thermal bridge" across which the heat passes (or may pass) in two directions, which adversely affects the reliability and efficiency of both said thermal diode and a diode conductive wall built by means of thermal diodes (5) of known type.

A diode conductive wall (1) made according to the invention comprises at least one thermal diode (5), whose tubular body consists of two metal bodies (6) connected together by a thermally insulating body (7) as shown in Figure 2. In this way, the aforesaid "thermal bridge" is avoided.

In Fig. 1 the ends of the thermal diodes (5) thermally coupled to the external surface (3) are located lower down than the ones thermally coupled to the external surface (4). The thermal diodes (5) are therefore suitable to transfer heat from the external surface (3) to the external surface (4), whereas they are not (practically) suitable to transfer heat in the opposite direction, i.e., from the external surface (4) to the external surface (3).

There now follows a brief description of the working of the thermal diodes (5) for transferring heat from the external surface (3) to the external surface (4), should the temperature of the external surface (3) be higher than that of the external surface (4).

In contact with the external surface (3) the fluid contained in the thermal diode (5) heats up subtracting heat from the external surface (3), and comes into contact with the external surface (4), to which it transfers the heat drawn from the external surface (3), and comes back towards the external surface (3). The external surface (4) dissipates the heat transferred to it by the fluid into the environment (or in another way already known).

The fact that the thermal diode (5) is mounted inclined as illustrated in Fig. 1 favours proper circulation of the fluid in the diode itself (the heated fluid tends to rise, whilst the colder fluid tends to drop), whereas it opposes the circulation of the fluid in the (undesired) event of the temperature of the external surface (3) becoming for any reason lower than that of the external surface (4).

The angle of inclination of the thermal diode (5) with respect to the external surfaces (3, 4) may be approximately 45° and, in any case, between 10° and 80°.

In the herein described embodiment, to allow the fluid to circulate in the thermal diode (5) the following conditions are necessary:
i) in contact with the external surface (3), which is hotter, the fluid must increase in volume (with or without change of state);
ii) in contact with the external surface (4), which is colder, the fluid must decrease in volume (with or without change of state);
iii) the difference in temperature between the external surfaces (3) and (4) must be sufficient to "sustain" the circulation of the fluid;
iv) the temperature of the external surface (4), which is colder, cannot be less than a limit value, below which the fluid becomes too viscous to circulate inside the thermal diode (5) or does not change its state.

This latter condition constitutes an important feature of the invention: when the temperature of the colder external surface of the diode conductive wall (1) drops below the aforesaid limit value, which is different according to the fluid used, the thermal diode (5) is "interdicted", thus preventing further heat being subtracted from the hotter external surface of the diode conductive wall (1) even if the difference in temperature between the two external surfaces would be sufficient to "sustain" fluid circulation inside the thermal diode (5).

This feature is advantageous, for example, if the diode conductive wall (1) constitutes one of the walls of a container, the internal temperature of which (i.e., the temperature of the external surface (3)) will not drop any further whenever and for the entire period in which the temperature of the external environment (i.e., the temperature of the external wall (4)) drops below the aforesaid limit value, which is preset by suitably choosing the fluid to be used inside the thermal diodes (5).

Merely as an example, if this heat transferring fluid is water, the corresponding limit value is 4°C; if this fluid is 12% glycolated water, the corresponding limit value is -5°C; if this fluid is fluorocarbon, the corresponding limit value is 30°C.

Figure 2 shows one of the thermal diodes (5) of Fig. 1 made according to the invention. In Fig. 2 it is possible to see the metal bodies (6) thermally coupled to the external surfaces (3, 4) of the diode conductive wall (1); the central body (7), which is thermally insulating and connects together the metal bodies (6) and the metal plates (8), set between the external surfaces (3, 4) of the diode conductive watt (1) and the end of the corresponding metal body (6) to increase the contact surface between the external surfaces (3, 4) of the diode conductive wall (1) and the corresponding metal body (6) and to improve the thermal coupling thereof.

Preferably (but not necessarily) the central body (7), which is thermally insulating, is made of rubber or another deformable material. This is advantageous because it allows to fill (almost) completely the thermal diode (5), improving the latter's efficiency, with a fluid (e.g., a gas) which dilates notably when heated, or else with a fluid (e.g., water) which changes in volume when it changes state, thus preventing any risk of breakage and/or of damage of the thermal diode (5) due to said dilation or else to said change of state.

If a thermal diode (5) does not include a central body (7) and/or if such body (7) is not made of deformable material, to prevent any risk of breakage and/or of damage of the thermal diode (5) due to a dilation or else to a change of state of the fluid contained in the thermal diode, it is not possible to fill (almost) completely the diode itself with fluid, reducing therefore its efficiency, assuming all the other conditions equal.

The characteristics of a thermal diode (5) made according to the invention and the advantages obtainable by using diode conductive walls (1), and in particular diode conductive walls (1) comprising thermal diodes (5) according to the invention, instead of walls made of insulating material of a traditional type will be evident from the following example, which in no way limits the possibilities, and from the following applications.

### Example No. 1

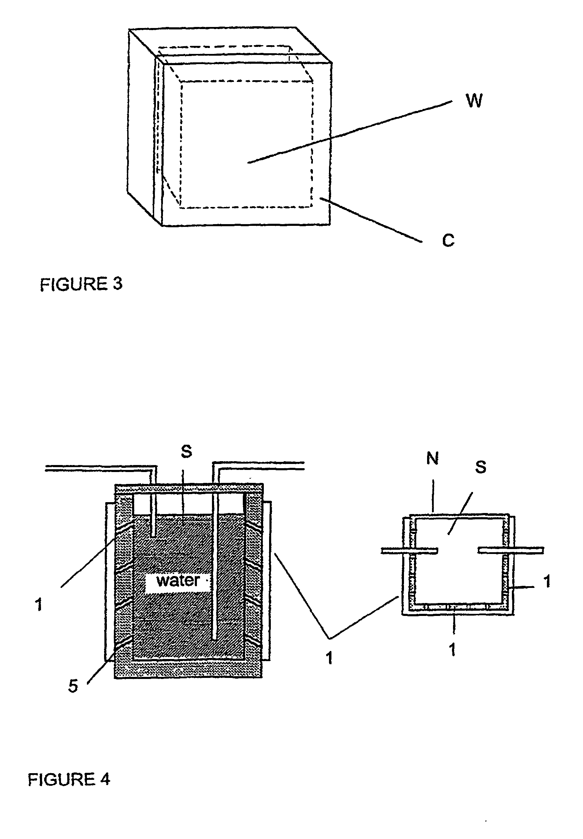

Five cubic containers C have been built (Fig. 3), inside which a constant-heat 15-Watt source W has been set.

The first container comprises five 500x500 mm walls consisting of diode conductive walls (external surfaces made of 3-mm thick aluminium; insulating wall made of 60 mm of polyurethane foam), each of which including four thermal diodes (comprising a thermally insulating central body) containing water, whereas the sixth wall (floor) consists of an insulating wall made of polyurethane foam.

The second container differs from the first only in that it does not include the thermal diodes.

The third container differs from the first only in that the thermal diodes consist of a single metal body.

The fourth container differs from the first only in that the thermal diodes (comprising a thermally insulating central body) are mounted "inverted" with respect to those of container 1.

The fifth container, comprising five 380x380 mm walls made of 3-mm thick aluminium sheet, corresponds to the internal envelope of the first container without the insulating walls and without the external surfaces of the diode conductive walls (the floor consists of an insulating wall made of polyurethane foam).

Maintaining the ambient temperature Ta at preset values, the temperatures (T1, T2, T3, T4, and T5) inside the five containers were measured in degrees centigrade. The results of the set of measurements are gathered together in the following table:

| | | | | | | | | | | |
|---|---|---|---|---|---|---|---|---|---|---|
| | 1 | 2 | 3 | 4 | 5 | 6 | 7 | 8 | 9 | 10 |
| Ta | T1 | T2 | T3 | T4 | T5 | T1-Ta | T2-Ta | T3-Ta | T4-Ta | T5-Ta |
| 25 | 33.5 | 57 | 31 | 51 | 29 | 8.5 | 32 | 6 | 26 | 4 |
| 0 | 14 | 33 | 6.5 | 27 | 4.5 | 14 | 33 | 6.5 | 27 | 4.5 |
| -13 | 12.5 | 20.5 | -5.5 | 15.5 | -8 | 25.5 | 33.5 | 7.5 | 28.5 | 5 |

From the above table it may be noted that:
- the thermal diodes comprising a thermally insulating central body limit the internal temperature of the container (column 1) and the difference in temperature compared to the environment (column 6) if Ta >> 0°C; they limit the variation in internal temperature of the container if Ta ≤ 0°C;
- if the thermal diodes are absent, are made of a single metal body or are mounted "inverted", or else if the container (container 5) does not include the diode conductive walls nor the insulating walls, the difference in temperature with respect to the environment (columns 7, 8, 9 and 10, respectively) remains practically constant: the temperature variation inside the container (columns 2, 3, 4, and 5, respectively) follows the ambient temperature Ta;
- the thermal diodes consisting of a single metal body are able to limit the temperature inside the container (column 3) if Ta >> 0°C, but (on account of the "thermal bridge" due to their totally metal body) they are not able to limit the temperature variation inside the container if Ta ≤ 0°C;
- the advantages that may be obtained by using thermal diodes comprising a thermally insulating central body instead of thermal diodes consisting of a single metal body may be verified comparing columns 1 and 3, and columns 6 and 8, respectively;
- if the thermal diodes are mounted "inverted", similar effects are obtained to those that are obtained when the thermal diodes are absent, as may be verified by comparing column 2 to column 4, and column 7 to column 9;
- if the container does not include diode conductive walls or insulating walls (container 5), the difference in temperature with respect to ambient temperature (column 10) is very low and the variation in temperature inside the container (column 5) follows the variation in ambient temperature Ta.

Figure 4 shows a sectional view and a plan view of a possible application of diode conductive walls (1) made according to the invention.

In Figure 4 a tank of water S may be seen positioned in such a way as to be exposed to rays of sunlight all day long, in which three walls are made with diode conductive walls (1) (protected by panels made of transparent material), whilst the fourth wall N (in the northern hemisphere, that exposed to the north) is made using an insulating panel of traditional type.

In the course of the day, the walls (1) are in turn exposed to the rays of sunlight, and their thermal diodes (5) (only one of which is labelled in Fig. 4 for reasons of simplicity of graphical representation) allow the heat of the sun to penetrate inside the tank S, thus heating the water contained therein, whilst they prevent the heat stored in the tank S from escaping at night.

Applying to the tank S the diode conductive walls (1), an efficient solar collector is obtained in a simple and economical way, which is able to store heat during the entire day, thus avoiding costs deriving from purchasing and setting-up a solar panel, corresponding water connections and the non-return valves that are indispensable for preventing heat losses during the night.

Diode conductive walls according to the invention may moreover be advantageously used in active environmental conditioning systems (which include an air conditioner), or else in passive environmental conditioning systems (without air conditioner), not illustrated in the figures.

The diode conductive walls (1) behave like thermal insulators for external temperatures higher than the internal ones and, in any case, at low temperatures, and as heat conductors for external temperatures lower than internal ones. In an active environmental conditioning system, when the air conditioner has brought the ambient temperature up to the desired value, the diode conductive walls contribute to maintain this temperature value, thus reducing the operating time of the motor of the air conditioner, and consequently the corresponding running costs.

In prefabricated buildings, the walls exposed to sunlight repel solar radiation, whilst those in the shade emit the heat present inside the prefabricated building when the temperature outside the wall so permits (i.e., when the external temperature is lower than the internal one), thus reducing the overtemperature inside the prefabricated building due to solar radiation and, consequently, the need for an air conditioner and/or its operating time.

Without departing from the scope of the invention, it is possible for a skilled man to make to the diode conductive wall, which is the subject of the present description, all the modifications and improvements suggested by normal experience and by the natural evolution of techniques.

## Claims

1. Diode conductive wall, comprising a wall (2) which is made of thermally insulating material delimited by two thermally conductive external surfaces (3, 4) connected together by at least one thermal diode (5), which transversely crosses said wall (2) made of thermally insulating material, said at least one thermal diode (5) transferring heat in basically one direction from one to the other of said external surfaces (3, 4) of said diode conductive wall (1) and consisting of a tubular body, at least partially filled with a heat transferring fluid, comprising two metal bodies (6), each of which is thermally coupled to one of said external surfaces (3, 4) of said diode conductive wall (1), said diode conductive wall being **characterised in that** said metal bodies (6) are connected by a thermally insulating central body (7).

2. Diode conductive wall as per Claim 1, **characterized by** the fact that said thermally insulated central body (7) is made of deformable material.

3. Diode conductive wall as per Claim 1, **characterized by** the fact that said at least one thermal diode (5) consists of a metal body having the ends thermally coupled, respectively, to one of said external surfaces (3, 4) of said diode conductive wall (1).

4. Diode conductive wall as per Claim 1, **characterized by** the fact that it also comprises metal plates (8) positioned between said external surfaces (3, 4) of said diode conductive wall (1) and the ends of each of said at least one thermal diode (5).

5. Diode conductive wall as per Claim 1, **characterized by** the fact that said at least one thermal diode (5) is mounted inclined in said wall (2) made of thermally insulating material, the ends of each of said at least one thermal diode (5), thermally coupled with said external surface (4, respectively 3) of said diode conductive wall (1) to which said thermal diode (5) transfers said heat, being positioned higher up with respect to the ends of each of said at least one thermal diode (5) thermally coupled with said external surface (3, respectively 4) of said diode conductive wall (1) from which said thermal diode (5) draws said heat.

6. Diode conductive wall as per Claim 5, **characterized by** the fact that the inclination of said at least one thermal diode (5) with respect to said external surfaces (3, 4) of said diode conductive wall (1) is between 10° and 80°.

7. Diode conductive wall as per Claim 6, **characterized by** the fact that said inclination of said at least one thermal diode (5) with respect to said external surfaces (3, 4) of said diode conductive wall (1) is approximately 45°.

8. Diode conductive wall as per Claim 1, **characterized by** the fact that said at least one thermal diode (5) does not transfer said heat when the temperature of said external surfaces (4, respectively 3) of said diode conductive wall (1), to which said thermal diode (5) transfers said heat, is less then a preset limit value.

9. Diode conductive wall as per Claim 8, in which said fluid suitable for transferring said heat is water, **characterized by** the fact that said preset limit value is 4°C.

10. Diode conductive wall as per Claim 8, in which said fluid suitable for transferring said heat is 12% glycolated water, **characterized by** the fact that said preset limit value is -5°C.

11. Diode conductive wall as per Claim 8, in which said fluid suitable for transferring said heat is fluorocarbon, **characterized by** the fact that said preset limit value is 30°C.

## Patentansprüche

1. Diodisch wärmeleitende Wand, bestehend aus einer Wand (2), die aus einem wärmeisolierenden Werkstoff hergestellt ist und durch zwei wärmeleitende Außenflächen (3, 4) begrenzt ist, die durch wenigstens eine Wärmeleitungsdiode (5) verbunden sind, die die Wand (2) durchquert, Wärme praktisch nur in einer Richtung zwischen den beiden Außenflächen (3, 4) der diodisch wärmeleitenden Wand (1) leitet und einen röhrenförmigen Grundkörper besitzt, der wenigstens teilweise mit einer wärmeübertragenden Flüssigkeit gefüllt ist, und zu der weiter zwei Metallkörper (6) gehören, von denen jeder in thermischem Kontakt mit einer der Außenflächen (3, 4) der diodisch wärmeleitenden Wand (1) verbunden ist, wobei die diodisch wärmeleitende Wand (1) **dadurch gekennzeichnet ist, dass** die Metallkörper (6) über einen wärmeisolierenden Zentralkörper (7) verbunden sind.

2. Diodisch wärmeleitende Wand entsprechend Anspruch 1 **gekennzeichnet dadurch, dass** der wärmeisolierende Zentralkörper (7) aus einem verformbaren Werkstoff besteht.

3. Diodisch wärmeleitende Wand entsprechend Anspruch 1 **gekennzeichnet dadurch, dass** die wenigstens eine Wärmeleitungsdiode (5) aus einem Metallkörper besteht, dessen Enden in thermischem Kontakt mit jeweils einer der Außenflächen (3, 4) der diodisch wärmeleitenden Wand (1) stehen.

4. Diodisch wärmeleitende Wand entsprechend Anspruch 1 **gekennzeichnet dadurch, dass** sie mit Metallplatten (8) ausgestattet ist, die sich jeweils zwischen den Außenflächen (3, 4) der diodisch wärmeleitenden Wand (1) und den Enden der wenigstens einen Wärmeleitungsdiode (5) befinden.

5. Diodisch wärmeleitende Wand entsprechend Anspruch 1 **gekennzeichnet dadurch, dass** die wenigstens eine Wärmeleitungsdiode (5) in der aus einem wärmeisolierenden Werkstoff bestehenden Wand (2) mit einer Neigung eingebaut ist, wobei die Enden einer jeden der Wärmeleitungsdioden (5), von denen wenigstens eine vorhanden ist, die in thermischem Kontakt mit derjenigen Außenfläche (4 bzw. 3) der diodisch wärmeleitenden Wand (1) verbunden sind, der die Wärmleitungsdiode (5) Wärme zuführt, höher gelegen sind als die Enden, der Wärmeleitungsdioden (5), von denen wenigstens eine vorhanden ist, die in thermischem Kontakt mit derjenigen Außenfläche (3 bzw. 4) der diodisch wärmeleitenden Wand (1) verbunden sind, von der die Wärmeleitungsdiode (5) Wärme abführt.

6. Diodisch wärmeleitende Wand entsprechend Anspruch 5 **gekennzeichnet dadurch, dass** der Neigungswinkel der Wärmeleitungsdioden (5), von denen wenigstens eine vorhanden ist, relativ zu den Außenflächen (3, 4) der diodisch wärmeleitenden Wand (1) zwischen 10* und 80° liegt.

7. Diodisch wärmeleitende Wand entsprechend Anspruch 6 **gekennzeichnet dadurch, dass** der Neigungswinkel der Wärmeleitungsdioden (5), von denen wenigstens eine vorhanden ist, relativ zu den Außenflächen (3, 4) der diodisch wärmeleitenden Wand (1) ungefähr 45° beträgt.

8. Diodisch wärmeleitende Wand entsprechend Anspruch 1 **gekennzeichnet dadurch, dass** die wenigstens eine Wärmeleitungsdiode (5) keine Wärme überträgt, wenn die Temperatur derjenigen Außenfläche (4 bzw. 3) der diodisch wärmeleitenden Wand (1), zu der die Wärmeleitungsdiode (5) Wärme überträgt, unterhalb eines zuvor festgesetzten Grenzwerts liegt.

9. Diodisch wärmeleitende Wand entsprechend Anspruch 8 **gekennzeichnet dadurch, dass** die zur Wärmeübertragung verwendete Flüssigkeit Wasser ist und dass der vorab festgesetzte Grenzwert 4°C beträgt.

10. Diodisch wärmeleitende Wand entsprechend Anspruch 8, bei der die zur Wärmeübertragung verwendete Flüssigkeit Wasser mit einem Glycolgehalt von 12% ist, **gekennzeichnet dadurch, dass** der vorab festgesetzte Grenzwert -5°C beträgt.

11. Diodisch wärmeleitende Wand entsprechend Anspruch 8, bei der die zur Wärmeübertragung verwendete Flüssigkeit Fluorkohlenwasserstoff ist, **gekennzeichnet dadurch, dass** der vorab festgesetzte Grenzwert 30°C beträgt.

## Revendications

1. Paroi conductrice à diodes, comprenant une paroi (2) constituée d'un matériau thermiquement isolant délimité par deux surfaces externes conductrices (3, 4) connectées ensemble par au moins une diode thermique (5), qui traverse transversalement ladite paroi (2) constituée d'un matériau thermiquement conducteur, ladite au moins une diode conductrice (5) transférant la chaleur dans basiquement au moins une direction entre l'une et l'autre desdites surfaces externes (3, 4) de ladite paroi conductrice à diodes (1) et consistant en un corps tubulaire, contenant, au moins partiellement, un fluide de transfert thermique, et comprenant deux corps métalliques (6), dont chacun est couplé thermiquement à l'une desdites surfaces (3, 4) de ladite paroi conductrice à diodes (1), ladite paroi conductrice à diodes étant **caractérisée en ce que** lesdits corps métalliques (6) sont connectés par un corps central thermiquement isolant (7).

2. Paroi conductrice à diodes selon la revendication 1, **caractérisée en ce que** ledit corps central thermiquement isolant (7) est constitué d'un matériau déformable.

3. Paroi conductrice à diodes selon la revendication 1, **caractérisée en ce que** ladite au moins une diode thermique (5) consiste en un corps métallique dont les extrémités sont couplées thermiquement, respectivement, à l'une desdites surfaces thermiques (3, 4) de ladite paroi conductrice à diodes (1).

4. Paroi conductrice à diodes selon la revendication 1, **caractérisée en ce qu'**elle comprend également des plaques métalliques (8) positionnées entre lesdites surfaces externes (3, 4) de ladite paroi conductrice à diodes (1) et les extrémités de chacune de ladite au moins une diode thermique (5).

5. Paroi conductrice à diodes selon la revendication 1, **caractérisée en ce que** ladite au moins une diode thermique (5) est montée inclinée dans ladite paroi (2) constituée d'un matériau thermiquement isolant, les extrémités de chacune de ladite au moins une diode thermique (5), thermiquement couplées à ladite surface externe (4, respectivement 3) de ladite paroi conductrice à diodes (1) à laquelle ladite diode thermique (5) transfère ladite chaleur, étant positionnées plus haut par rapport aux extrémités de chacune de ladite au moins une diode thermique (5) thermiquement couplée à ladite surface externe (3, respectivement 4) de ladite paroi conductrice à diodes (1) dont ladite diode thermique (5) extrait ladite chaleur.

6. Paroi conductrice à diodes selon la revendication 5, **caractérisée en que** l'inclinaison de ladite au moins une diode thermique (5) par rapport aux dites surfaces externes (3, 4) de la dite paroi conductrice à diodes (1) est comprise entre 10° et 80°.

7. Paroi conductrice à diodes selon la revendication 6, **caractérisée en que** l'inclinaison de ladite au moins une diode thermique (5) par rapport aux dites surfaces externes (3, 4) de la dite paroi conductrice à diodes (1) est d'approximativement 45°.

8. Paroi conductrice à diodes selon la revendication 1, **caractérisée en ce que** ladite au moins une diode thermique (5) ne transfère pas ladite chaleur lorsque la température desdites surfaces externes (4, respectivement 3) de ladite paroi conductrice à diodes (1), à laquelle ladite au moins une diode thermique (5) transfère ladite chaleur, est inférieure à une valeur limite prédéfinie.

9. Paroi conductrice à diodes selon la revendication 8, dans laquelle ledit fluide approprié pour transférer ladite chaleur est de l'eau, **caractérisée en ce que** ladite valeur limite prédéfinie est inférieure à 4°C.

10. Paroi conductrice à diodes selon la revendication 8, dans laquelle ledit fluide approprié pour transférer ladite chaleur est de l'eau glycolatée à 12%, **caractérisée en ce que** ladite valeur limite prédéfinie est -5°C.

11. Paroi conductrice à diodes selon la revendication 8, dans laquelle ledit fluide approprié pour transférer ladite chaleur est du fluorocarbone, **caractérisée en ce que** ladite valeur limite prédéfinie est 30°C.
